# FASCICULE DE BREVET EUROPEEN

(11) **EP 3 157 885 B1**
(45) Date de publication et mention de la délivrance du brevet: **25.04.2018**
(21) Numéro de dépôt: 15729848.0
(22) Date de dépôt: 18.06.2015
(51) Int. Cl.: C04B 28/02, C04B 7/52, C04B 28/04

(54) **BETON A ULTRA HAUTE PERFORMANCE**
ULTRALEISTUNGSSTARKER BETON
ULTRA-HIGH PERFORMANCE CONCRETE

(30) Priorité: 20.06.2014 FR 1455725
(43) Date de publication de la demande: 26.04.2017
(73) Titulaire: Lafarge, 75116 Paris (FR)
(72) Inventeur: PEREZ, Fabien, F-38291 Saint Quentin Fallavier (FR); FERREIRA, Laurent, F-38291 Saint Quentin Fallavier (FR); VERNE, Julien, F-38291 Saint Quentin Fallavier (FR); HALIN, Olivier, F-38291 Saint Quentin Fallavier (FR)
(74) Mandataire: Regimbeau
(86) Numéro de dépôt international: PCT/EP2015/063683
(87) Numéro de publication internationale: WO 2015/193419

(56) Documents cités:
- EP-A1- 0 934 915
- WO-A1-02/18291
- WO-A1-2009/111295
- FR-A1- 2 801 049
- FR-A1- 2 837 819
- FR-A1- 2 947 259
- US-A1- 2012 012 034
- "Feinstzemente" In: JOCHEN STARK & BERND WICHT ED: "ZEMENT UND KALK : DER BAUSTOFF ALS WERKSTOFF", 1 janvier 2000 (2000-01-01), BIRKHÄUSER VERLAG, BASEL, XP002737015, ISBN: 3-7643-6216-2 pages 154-159, tableaux 2.8.6,2.8.9

## Description

La présente invention se rapporte au domaine des matériaux pour le domaine de la construction, et plus particulièrement à une composition hydraulique permettant d'obtenir un béton à ultra haute performance.

Les développements technologiques des dernières années dans le domaine des bétons ont conduit à la mise au point de bétons à ultra haute performance, en terme notamment de résistance à la compression. Ces formulations de bétons impliquent généralement le recours à des matériaux supplémentaires en plus du ciment et des granulats, qui sont par exemple des fibres, des adjuvants organiques ou des particules dites ultrafines, de taille généralement inférieure aux particules de ciment. Des bétons ultra haute performance autonivelants sont décrits dans WO 2009/111295 et EP0934915. L'utilisation de ces bétons à ultra haute performance est rendue délicate lorsqu'il s'agit de réaliser en une seule fois des pièces en béton comprenant des éléments horizontaux et des éléments verticaux ou inclinés. Par exemple, lorsqu'il s'agit de fabriquer en usine une pièce en béton dont la section finale est en U ou en L, il est nécessaire de couler séparément et horizontalement les éléments de la pièce à réaliser puis de les assembler par collage, ancrage ou vissage pour obtenir la section en U ou en L. Ceci a pour inconvénient de multiplier les opérations de fabrication de ces pièces, la fabrication de la pièce en elle-même devient complexe, augmentant les possibilités d'erreurs, et amoindrissant la robustesse des pièces.

Aussi, il existe un besoin concernant des formulations de bétons à ultra haute performance permettant de réaliser des pièces en béton en une seule étape, quelque soit leurs formes ou leurs sections, sans recourir à une étape d'assemblage.

Aussi le problème que se propose de résoudre l'invention est de fournir de nouvelles formulations de bétons à ultra haute performance non auto nivelantes, qui puissent restées en place lorsqu'elles sont appliquées sur un plan incliné ou vertical.

Les compositions de bétons selon l'invention présentent les avantages suivants :
- elles peuvent être appliquées par projection, en particulier avec un pistolet de projection ou par pulvérisation à la lance à projeter ;
- elles peuvent être utilisées dans les procédés de fabrication de pièces en béton par calandrage ;
- elles peuvent être utilisées en réparation ou réhabilitation d'ouvrage en béton existant sur des surface inclinées ou verticales, par exemple une pile ou dalle de pont, ou un quai de déchargement d'un port ;
- elles présentent des résistances mécaniques en compression à 28 jours généralement comprises de 90 à 150 MPa, voire plus;
- elles peuvent contenir des fibres leurs conférant des propriétés additionnelles intéressantes, comme la ductilité ;
- elles présentent un seuil de contrainte supérieur à 50 Pa mesuré à un gradient de cisaillement de 0,1 s⁻¹, de préférence supérieur à 100 Pa.

La présente invention se rapporte à une composition hydraulique comprenant en parties relatives en masse par rapport au ciment
- 100 parties de ciment dont les particules présentent une surface spécifique BET comprise de 1,20 à 5 m²/g ;
- 32 à 42 parties d'eau ;
- 5 à 50 parties d'une addition minérale A1 dont les particules présentent un D50 inférieur ou égal à 6 µm et choisie parmi la fumée de silice, le métakaolin, le laitier, les pouzzolanes ou leurs mélanges;
- 90 à 230 parties d'un sable dont les particules présentent un D50 supérieur ou égal à 50 µm et un D90 inférieur ou égal à 3 mm ;
- 0,0001 à 10 parties d'un superplastifiant, dont la concentration en matière active est de 15 % en masse.

Dans la suite du texte, l'expression « composition hydraulique selon l'invention » désigne la composition hydraulique décrite ci-dessus, ainsi que ses variantes n°1 et n°2 décrites ci-dessous.

Selon une variante n°1, la composition hydraulique comprend en parties relatives en masse par rapport au ciment
- 100 parties de ciment dont les particules présentent une surface spécifique BET comprise de 1,20 à 1,7 m²/g ;
- 38 à 42 parties d'eau ;
- 8 à 20 parties d'une addition minérale A1 dont les particules présentent un D50 inférieur ou égal à 6 µm et choisie parmi la fumée de silice, le métakaolin, le laitier, les pouzzolanes ou leurs mélanges;
- 90 à 180 parties d'un sable dont les particules présentent un D50 compris de 100 µm à 400 µm et un D90 inférieur ou égal à 800 µm;
- 0,0001 à 10 parties d'un superplastifiant, dont la concentration en matière active est de 15 % en masse.

Selon une variante n°2, la composition hydraulique comprend en parties relatives en masse par rapport au ciment
- 100 parties de ciment dont les particules présentent une surface spécifique BET comprise de 1,20 à 5 m²/g ;
- 32 à 42 parties d'eau ;
- 5 à 50 parties d'une addition minérale A1 dont les particules présentent un D50 inférieur ou égal à 6 µm et choisie parmi la fumée de silice, le métakaolin, le laitier, les pouzzolanes ou leurs mélanges;
- 90 à 230 parties d'un sable dont les particules présentent un D50 supérieur ou égal à 50 µm et un D90 inférieur ou égal à 3 mm ;
- 0,0001 à 10 parties d'un superplastifiant dont la concentration en matière acticve est de 15 % en masse, et
- 0.001 à 2 parties d'un agent modifiant la viscosité.

Un liant hydraulique est un matériau qui prend et durcit par hydratation, par exemple un ciment.

La prise est généralement le passage à l'état solide d'un liant hydraulique par réaction d'hydratation. La prise est généralement suivie par une période de durcissement.

Le durcissement est généralement l'acquisition des résistances mécaniques d'un liant hydraulique. Le durcissement a généralement lieu après la fin de la prise.

La composition hydraulique selon l'invention inclut à la fois les compositions à l'état frais et à l'état durci, par exemple un coulis de ciment, un mortier ou un béton.

Les ciments convenant pour être utilisés selon la présente invention sont généralement les ciments Portland dont la surface BET est comprisse de 1,20 à 5 m²/g.

Les ciments Portland préférés sont ceux tels que définis dans la norme européenne NF EN 197-1 de février 2001, plus préférentiellement ce sont les ciments CEM I.

De préférence, le ciment est un ciment dont les particules présentent une surface spécifique BET comprise de 1,20 à 3 m²/g, plus préférentiellement comprise de 1,20 à 2,2, m²/g encore plus préférentiellement comprise de 1,20 à 1,7 m²/g.

De préférence, le ciment est un ciment dont les particules présentent un D10 compris de 1 µm à 8 µm, plus préférentiellement de 1 µm à 5 µm, encore plus préférentiellement de 1 µm à 2 µm.

De préférence, le ciment est un ciment dont les particules présentent un D50 compris de 4 µm à 10 µm, plus préférentiellement de 5 µm à 9 µm.

De préférence, le ciment est un ciment dont les particules présentent un D90 compris de 8 µm à 25 µm, plus préférentiellement 10 µm à 20 µm.

De préférence, le ciment est un ciment dont la surface spécifique Blaine supérieure ou égale à 6050 cm²/g, plus préférentiellement supérieure ou égale à 6100 cm²/g.

Le ciment Portland pouvant être utilisé selon la présente invention peut être broyé et/ou séparé (par un séparateur dynamique) afin d'obtenir un ciment ayant une surface spécifique Blaine supérieure ou égale à 6050 cm²/g. Ce ciment peut être qualifié d'ultrafin. Le ciment peut par exemple être broyé selon 2 méthodes.

Selon une première méthode, le ciment ou le clinker peut être broyé jusqu'à une surface spécifique Blaine de 6050 à 9000 cm²/g. Un séparateur de haute efficacité, de deuxième génération ou de troisième génération, ou un séparateur de très haute efficacité, peut être utilisé dans cette première étape pour séparer le ciment ayant la finesse désirée et écarter le ciment n'ayant pas la finesse désirée. Ce ciment est alors renvoyé dans le broyeur.

Selon une deuxième méthode, un ciment Portland peut passer dans un séparateur de très haute efficacité, dit THF (très haute finesse), afin de séparer les particules de ciment ayant une surface spécifique Blaine supérieure ou égale à la finesse cible (la finesse cible étant supérieure à 6050 cm²/g) et les particules de ciment ayant une surface spécifique Blaine inférieure à la finesse cible. Les particules de ciment ayant une surface spécifique Blaine supérieure ou égale à la finesse cible peuvent être utilisées telles quelles. Les particules de ciment ayant une surface spécifique Blaine inférieure à la finesse cible peuvent être écartées ou broyées séparément jusqu'à l'obtention de la surface spécifique Blaine souhaitée. Les broyeurs qui peuvent être utilisés dans les deux méthodes sont par exemple un broyeur à boulets, un broyeur vertical, une presse à rouleaux, un broyeur horizontal (par exemple de type Horomill©) ou un broyeur vertical agité (par exemple de type Tower Mill).

De préférence, la composition hydraulique selon l'invention comprend de 33 à 42 parties d'eau, plus préférentiellement de 35 à 42 parties d'eau, encore plus préférentiellement de 38 à 42 parties d'eau exprimée en parties relatives en masse par rapport au ciment.

De préférence, la composition hydraulique selon l'invention comprend de 6 à 40 parties de A1, plus préférentiellement de 7 à 30 parties de A1, encore plus préférentiellement de 8 à 20 parties de A1, exprimée en parties relatives en masse par rapport au ciment.

De préférence, A1 est une addition dont les particules présentent un D50 inférieur ou égal à 6 µm, plus préférentiellement inférieur ou égal à 2 µm.

De préférence, la composition hydraulique selon l'invention comprend de 90 à 210 parties de sable, plus préférentiellement de 90 à 180 parties de sable, exprimée en parties relatives en masse par rapport au ciment.

De préférence, la composition hydraulique selon l'invention comprend un sable dont les particules présentent un D10 compris de 150 µm à 400 µm.

De préférence, la composition hydraulique selon l'invention comprend un sable dont les particules présentent un D50 compris de 100 à 500 µm, plus préférentiellement compris de 100 à 400 µm.

De préférence, la composition hydraulique selon l'invention comprend un sable dont les particules présentent un D90 inférieur ou égal à 2 mm, plus préférentiellement un D90 compris de 200 µm à 1 mm, encore plus préférentiellement un D90 compris de 200 µm à 600 µm.

De préférence, le sable de la composition hydraulique selon l'invention est un sable siliceux, un sable de bauxite calcinée ou non, un sable silico-calcaire ou leurs mélanges.

De préférence la composition hydraulique selon l'invention comprend en outre de 0 à 300 parties d'une addition minérale A2, différente de A1, dont les particules présentent un D50 compris de 1 µm à 50 µm, exprimé en parties relatives en masse par rapport au ciment.

De préférence, A2 ne présente pas d'activité pouzzolanique. Par activité pouzzolanique, on entend au sens de l'invention un matériau ayant pour aptitude de former un composé ayant des propriétés hydrauliques lorsqu'il est mélangé à température ordinaire de 20°C avec de la chaux ou avec un matériau libérant de la chaux. Aussi, on entend au sens de l'invention un matériau ne présentant pas d'activité pouzzolanique, un matériau n'ayant pas pour aptitude de former un composé ayant des propriétés hydrauliques lorsqu'il est mélangé à température ordinaire de 20°C avec de la chaux ou avec un matériau libérant de la chaux.

Des matériaux ne présentant pas d'activité pouzzolanique sont par exemple des matériaux contenant du carbonate de calcium (par exemple du carbonate de calcium broyé ou précipité), de préférence un carbonate de calcium broyé. Le carbonate de calcium broyé peut, par exemple, être le Durcal® 1 (OMYA, France). Les matériaux ne présentant pas d'activité pouzzolanique peuvent être un quartz broyé, par exemple le C6 qui est un matériau de remplissage de silice sensiblement non-pouzzolanique fourni par Sibelco, France. La surface spécifique BET préférée (déterminée par des méthodes connues décrites ci-après) du carbonate de calcium ou du quartz broyé est de 2 - 10 m²/g, généralement moins de 8 m²/g, par exemple de 4 à 7 m²/g, de préférence moins d'environ 6 m²/g. Le carbonate de calcium précipité convient également comme matériau ne présentant pas d'activité pouzzolanique. Les particules individuelles ont généralement une taille (dite primaire) de l'ordre de 20 nm. Les particules individuelles s'agglomèrent en agrégats ayant une taille (dite secondaire) de 0,1 à 1 µm. Les agrégats ayant une taille (secondaire) de 0,1 à 1 µm peuvent eux-mêmes former des agrégats ayant une taille (dite ternaire) supérieure à 1 µm.

Un matériau unique ne présentant pas d'activité pouzzolanique ou un mélange de matériaux ne présentant pas d'activité pouzzolanique peuvent être utilisé dans la composition hydraulique selon l'invention, par exemple du carbonate de calcium broyé, du quartz broyé ou du carbonate de calcium précipité ou un mélange de ceux-ci.

L'addition minérale A2 est généralement un matériau minéral finement divisé utilisé dans les compositions hydrauliques (par exemple un béton) ou les liants hydrauliques (par exemple un ciment) afin d'améliorer certaines propriétés ou pour leur apporter des propriétés particulières. Les additions minérales A2 sont, par exemple des schistes calcinés (par exemple tels que définis dans la norme NF EN 197-1, paragraphe 5.2.5), des additions minérales comprenant du carbonate de calcium, par exemple du calcaire (par exemple tel que défini dans la norme NF EN 197-1, paragraphe 5.2.6), des additions minérales comprenant de la silice, par exemple des fines siliceuses ou leurs mélanges.

De préférence, l'addition minérale A2 est un filler siliceux.

De préférence, la composition hydraulique selon l'invention comprend en outre de 0 à 10 parties de sulfate de calcium anhydre, exprimé en parties relatives en masse par rapport au ciment.

Le sulfate de calcium anhydrite existe à l'état naturel. Il est également possible d'utiliser un sulfate de calcium anhydre qui est un sous-produit de certains procédés industriels.

De préférence, lorsque la finesse du ciment augmente, il est possible d'augmenter également la quantité de sulfate de calcium anhydre pour maintenir des résistances mécaniques équivalentes. L'homme du métier saura de par ses connaissances optimiser la quantité de sulfate de calcium anhydre en utilisant des méthodes connues. Cette optimisation se fera en fonction de la finesse des particules de ciment. Par exemple, l'homme du métier pourrait ajouter 2,5 parties de sulfate de calcium anhydre pour un ciment dont les particules présentent une surface spécifique BET de 1,7 m²/g, exprimé en parties relatives en masse par rapport au ciment. Selon un autre exemple, l'homme du métier pourrait ajouter 4,5 parties de sulfate de calcium anhydre pour un ciment dont les particules présentent une surface spécifique BET de 1,85 m²/g, exprimé en parties relatives en masse par rapport au ciment.

De préférence, la composition hydraulique selon l'invention comprend en outre des fibres minérales (par exemple verre, basalte), des fibres organiques, des fibres métalliques (par exemple acier) ou un mélange de celles-ci.

Les fibres organiques peuvent notamment être choisies parmi les fibres d'alcool polyvinylique (APV), les fibres de poly-acrylonitrile (PAN), les fibres de polyethylène haute densité (PEHD), les fibres de polyamide ou polyimide, des fibres de polypropylène, les fibres d'aramide ou les fibres de carbone. Des mélanges de ces fibres peuvent également être utilisés.

Ces fibres organiques peuvent se présenter sous forme d'objet constitué soit de monobrin, soit de multibrin, le diamètre de l'objet allant de 25 microns à 800 microns. La longueur individuelle des fibres organiques est de préférence comprise entre 10 et 50 mm.

Le recours à des mélanges de fibres de caractéristiques différentes permet d'adapter les propriétés du béton par rapport aux caractéristiques recherchées.

De préférence, la composition hydraulique selon l'invention comprend en outre de 0.001 à 1,5 parties d'un agent modifiant la viscosité, exprimé en parties relatives en masse par rapport au ciment.

Le terme "agent modifiant la viscosité" tel qu'utilisé dans la présente description et les revendications qui l'accompagnent, est à comprendre comme incluant les agents viscosants, les épaississants, les agents de modification de la limite d'écoulement. Il s'agit de produit soluble dans l'eau qui augmente la viscosité du milieu dans lequel ils sont introduits.

De préférence, l'agent modifiant la viscosité de la composition hydraulique selon l'invention est choisi parmi :
- les polymères d'origine naturelle : l'amidon, les protéines de plantes, l'alginate, la gomme welane et toutes les autres gommes naturelles (gomme de guar, gomme xanthane, gomme arabique, farine de caroube, carraghénane, diutane);
- les polymères semi synthétiques, comme les dérivés d'amidon, les éthers de cellulose comme la méthylcellulose, l'éthylcellulose, l'hydroxyméthylcellulose, l'hydroxypropylcellulose, l'hydroxyéthyl méthyl cellulose (HEMC), l'hydroxypropyl méthyl cellulose (HPMC), l'hydroxyde éthyle cellulose (HEC), et la carboxyméthyl cellulose (CMC) ;
- les polymères synthétiques, principalement les latex, les polyéthers (polyéthylène glycol), les polyacrylamides, et ceux basé sur le vinyle(Alcool polyvinylique).

Un mélange de ces agents peut être utilisé.

De préférence, la composition hydraulique selon l'invention comprend en outre de 0 à 0,5 parties d'un agent anti-moussant, exprimé en parties relatives en masse par rapport au ciment.

Selon une variante, la composition hydraulique selon l'invention peut comprendre en outre des adjuvants comme par exemple ceux décrits dans les normes EN 934-2, EN 934-3 ou EN 934-4.

Il peut s'agir d'adjuvant pour composition hydraulique, par exemple un accélérateur, un agent entraîneur d'air, un retardateur, un inertant des argiles, un plastifiant et/ou un superplastifiant. Les inertants des argiles sont des composés qui permettent de réduire ou de prévenir les effets néfastes des argiles sur les propriétés des liants hydrauliques. Les inertants des argiles incluent ceux décrits dans WO 2006/032785 et WO 2006/032786.

La composition hydraulique selon l'invention peut comprendre en outre un agent activateur qui permet de favoriser les réactions d'hydratation des matériaux vitreux. De tels agents comprennent des sels sodique et/ou calcique. La composition hydraulique selon l'invention comprend de 0,0001 à 10 parties d'un superplastifiant, dont la concentration en matière active est de 15 % en masse. De préférence, ce superplastifiant se présente sous forme liquide.

De préférence, la composition hydraulique selon l'invention comprend 0,1 à 10 parties d'un superplastifiant, dont la concentration en matière active est de 15 % en masse. Plus préférentiellement la composition hydraulique selon l'invention comprend de 0,2 à 5 parties d'un superplastifiant, dont la concentration en matière acticve est de 15 % en masse.

En particulier, il est utile d'inclure un superplastifiant de type polycarboxylate.

Le terme "superplastifiant" tel qu'utilisé dans la présente description et les revendications qui l'accompagnent est à comprendre comme incluant à la fois les réducteurs d'eau et les superplastifiants tels que décrits dans le livre intitulé « Concrete Admixtures Handbook, Properties Science and Technology », V.S. Ramachandran, Noyes Publications, 1984.

Un réducteur d'eau est défini comme un adjuvant qui réduit de typiquement 10 à 15 % la quantité d'eau de gâchage d'un béton pour une ouvrabilité donnée. Les réducteurs d'eau incluent, par exemple les lignosulfonates, les acides hydroxycarboxyliques, les glucides et d'autres composés organiques spécialisés, par exemple le glycérol, l'alcool polyvinylique, l'alumino-méthyl-siliconate de sodium, l'acide sulfanilique et la caséine.

Les superplastifiants appartiennent à une nouvelle classe de réducteurs d'eau, chimiquement différents des réducteurs d'eau normaux et capables de réduire les quantités d'eau d'environ 30 %. Les superplastifiants ont été globalement classés en quatre groupes : les condensats sulfonés de naphtalène formaldéhyde (SNF) (généralement un sel de sodium) ; les condensats sulfonés de mélamine formaldéhyde (SMF) ; les lignosulfonates modifiés (MLS) ; et les autres. Des superplastifiants plus récents incluent des composés polycarboxyliques comme les polycarboxylates, par exemple les polyacrylates. Un superplastifiant est de préférence un superplastifiant nouvelle génération, par exemple un copolymère contenant un polyéthylène glycol comme chaîne greffée et des fonctions carboxyliques dans la chaîne principale comme un éther polycarboxylique. Les polycarboxylates-polysulfonates de sodium et les polyacrylates de sodium peuvent aussi être utilisés. Les dérivés d'acide phosphonique peuvent aussi être utilisés. La quantité nécessaire de superplastifiant dépend généralement de la réactivité du ciment. Plus la réactivité est faible, plus la quantité nécessaire de superplastifiant est faible. Pour réduire la quantité totale de sels alcalins, le superplastifiant peut être utilisé sous forme de sel de calcium plutôt que sous forme de sel de sodium.

La présente invention se rapporte également à un procédé de fabrication d'une composition hydraulique selon la présente invention dans lequel le ciment, les additions, le sable, l'eau et le superplastifiant sont mélangés, avec éventuellement les autres composés décrit ci-dessus. Le gâchage de la composition hydraulique peut être effectué, par exemple, selon des méthodes connues.

La composition hydraulique selon l'invention peut être utilisée directement sur chantier à l'état frais et appliquée sur la paroi à restaurer, ou utilisée en usine de préfabrication, ou utilisée en tant qu'enduit sur un support solide.

La présente invention se rapporte également à un procédé de fabrication d'un objet pour le domaine de la construction comprenant les étapes suivantes :
(i) préparation d'une composition hydraulique selon l'invention ;
(ii) application de la composition préparée à l'étape (i) sur un support.

De préférence, le procédé selon l'invention de fabrication d'un objet comprend en outre une étape (iii) de démoulage après durcissement de la composition hydraulique, en particulier lorsque le support de l'étape (ii) est un moule.

De préférence, le procédé selon l'invention de fabrication d'un objet comprend en outre une étape de pompage de la composition hydraulique après l'étape (i).

De préférence, selon le procédé de l'invention de fabrication d'un objet, le support de l'étape (i) peut être un moule, un mur, une paroi ou un sol.

De préférence, selon le procédé de l'invention de fabrication d'un objet, le support de l'étape (ii) est un moule, un mur, une paroi ou un sol. Il est également possible d'envisager que des éléments de renfort soit fixés sur le support et que ces éléments seront recouvert en tout ou partie lors de l'application de la composition hydraulique selon l'invention. Ces éléments de renfort peuvent être en matière minérales (verre, basalte), en matière organiques (par exemple en matière organique décrite plus haut dans le texte pour les fibres organiques), en matière métalliques (acier) ou un mélange de celles-ci. Par exemple, il peut s'agir d'un treillis en acier ou de barre de renfort en fibre de verre.

De préférence, selon le procédé de l'invention de fabrication d'un objet, l'étape (ii) est réalisée par projection de la composition hydraulique décrite ci-dessus, en particulier la composition hydraulique comprenant en parties relatives en masse par rapport au ciment
- 100 parties de ciment dont les particules présentent une surface spécifique BET comprise de 1,20 à 5 m²/g ;
- 32 à 42 parties d'eau ;
- 5 à 50 parties d'une addition minérale A1 dont les particules présentent un D50 inférieur ou égal à 6 µm et choisie parmi la fumée de silice, le métakaolin, le laitier, les pouzzolanes ou leurs mélanges;
- 90 à 230 parties d'un sable dont les particules présentent un D50 supérieur ou égal à 50 µm et un D90 inférieur ou égal à 3 mm ;
- 0,0001 à 10 parties d'un superplastifiant, dont la concentration en matière active est de 15 % en masse.
Il peut également être envisagé de projeter la composition hydraulique par apport d'énergie pneumatique, mécanique, par exemple par pression à l'aide d'un piston.

De préférence, selon le procédé de l'invention de fabrication d'un objet, l'étape (ii) est réalisée par pulvérisation de la variante n°1 de la composition hydraulique selon l'invention. Il est possible d'envisager de pulvériser en continu de l'air comprimé sur la composition hydraulique.

De préférence, selon le procédé de l'invention de fabrication d'un objet, l'étape (ii) est réalisée par coulage ou calandrage de la variante n°2 de la composition hydraulique selon l'invention.

De préférence, selon le procédé de l'invention de fabrication d'un objet, l'étape (ii) de projection peut être réalisée en utilisant :
- une pompe volumétrique telle que pompe à piston, pompe à membrane, pompe à engrenage, pompe à palette, pompe à vis excentrée ; ou
- une pompe dynamique telle que pompe centrifuge, pompe tourbillonnaire.

Selon une variante du procédé selon l'invention de fabrication d'un objet, il est possible après l'étape (ii) de fixer un renfort dans la composition à l'état frais puis de renouveler l'étape (ii).

Selon une variante du procédé selon l'invention de fabrication d'un objet, il est possible de projeter les fibres minérales, organiques ou métalliques décrites ci-dessus, indépendamment de la projection de la composition hydraulique selon l'invention. Cette projection de fibres peut avoir lieu simultanément ou après l'étape (ii).

De préférence, le procédé selon l'invention de fabrication d'un objet comprend en outre une étape de traitement thermique.

La présente invention se rapporte aussi à un objet mis en forme pour le domaine de la construction comprenant la composition hydraulique selon l'invention.

La composition hydraulique selon l'invention peut être mise en forme pour produire, après hydratation et durcissement, un objet mis en forme pour le domaine de la construction. L'invention se rapporte également à un tel objet mis en forme, qui comprend le liant hydraulique selon la présente invention ou la composition hydraulique selon la présente invention. Les objets mis en forme pour le domaine de la construction incluent, par exemple, un sol, une chape, une fondation, un mur, une cloison, un plafond, une poutre, un plan de travail, un pilier, une pile de pont, un parpaing, une canalisation, un poteau, un escalier, un panneau, une corniche, un moule, un élément de voirie (par exemple une bordure de trottoir), une tuile de toit, un revêtement (par exemple de route ou de mur), un élément participant à un système isolant.

La présente invention se rapporte aussi à un liant hydraulique comprenant les matériaux de la composition hydraulique selon l'invention à l'exception de :
- l'eau et
- du superplastifiant quand il est liquide.

Dans la présente description, y compris les revendications qui l'accompagnent, les pourcentages sont exprimés en masse, sauf autrement spécifié.

### Méthode de mesure de la surface spécifique BET

La surface spécifique des différentes poudres est mesurée comme suit. On prélève un échantillon de poudre de masse suivante : 0,1 à 0,2 g pour une surface spécifique estimée à plus de 30 m²/g ; 0,3 g pour une surface spécifique estimée à 10-30 m²/g ; 1 g pour une surface spécifique estimée à 3-10 m²/g ; 1,5 g pour une surface spécifique estimée à 2-3 m²/g ; 2 g pour une surface spécifique estimée à 1.5-2 m²/g ; 3 g pour une surface spécifique estimée à 1-1,5 m²/g.

On utilise une cellule de 3 cm³ ou de 9 cm³ selon le volume de l'échantillon. On pèse l'ensemble de la cellule de mesure (cellule + tige en verre). Puis on ajoute l'échantillon dans la cellule : le produit ne doit pas être à moins d'un millimètre du haut de l'étranglement de la cellule. On pèse l'ensemble (cellule + tige en verre + échantillon). On met en place la cellule de mesure sur un poste de dégazage et on dégaze l'échantillon. Les paramètres de dégazage sont de 30 min / 45°C pour le ciment Portland, le gypse, les pouzzolanes ; de 3 h / 200°C pour les laitiers, cendres volantes, ciment alumineux, calcaire ; et de 4 h / 300°C pour l'alumine de contrôle. La cellule est rapidement bouchée avec un bouchon après le dégazage. On pèse l'ensemble et on note le résultat. Toutes les pesées sont effectuées sans le bouchon, celui-ci étant temporairement retiré pour faire la mesure. La masse de l'échantillon est obtenue par soustraction de la masse de la cellule à la somme des masses de la cellule et de l'échantillon dégazé.

On effectue ensuite l'analyse de l'échantillon après l'avoir mis en place sur le poste de mesure. L'analyseur est le SA 3100 de Beckman Coulter. La mesure repose sur l'adsorption d'azote par l'échantillon à une température donnée, ici la température de l'azote liquide soit environ -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 10 mesures sur une silice de surface spécifique 21,4 m²/g est de 0,07. L'écart-type de reproductibilité obtenu à partir de 10 mesures sur un ciment de surface spécifique 0,9 m²/g est de 0,02. Une fois toutes les deux semaines un contrôle est effectué sur un produit de référence. Deux fois par an, un contrôle est réalisé avec l'alumine de référence fournie par le constructeur.

### Détermination de la granulométrie

Dans la présente description, y compris dans les revendications qui l'accompagnent, la granulométrie et la taille des particules sont mesurées par granulométrie laser, par exemple en utilisant un granulomètre laser Malvern MS2000. La mesure est effectuée dans l'éthanol. La source lumineuse est constituée par un laser rouge He-Ne (632 nm) et une diode bleue (466 nm). Le modèle optique est celui de Mie et la matrice de calcul est de type polydisperse.

L'appareil est étalonné avant chaque séance de travail au moyen d'un échantillon standard (silice C10 Sibelco) dont la courbe granulométrique est connue.

La mesure est réalisée avec les paramètres suivants : vitesse de pompe de 2300 tr/min et vitesse d'agitateur de 800 tr/min. L'échantillon est introduit de manière à obtenir une obscuration de 10 à 20 %. La mesure est réalisée après stabilisation de l'obscuration. Des ultrasons sont émis à 80 % pendant 1 minute pour assurer la désagglomération de l'échantillon. Après environ 30 secondes (pour évacuer d'éventuelles bulles d'air), une mesure est réalisée pendant 15 secondes (15000 images analysées). Sans vider la cellule, la mesure est répétée au moins 2 fois pour vérifier la stabilité du résultat et l'évacuation des éventuelles bulles.

Toutes les mesures présentées dans la description et les gammes spécifiées correspondent aux valeurs moyennes obtenues avec ultrasons.

La granulométrie des sables est généralement déterminée par tamisage.

Le D90, également noté D_{V}90, correspond au 90^{ème} centile de la distribution en volume de taille des particules, c'est-à-dire que 90 % des particules ont une taille inférieure au D90 et 10 % ont une taille supérieure au D90.

De même, le D50, également noté D_{V}50, correspond au 50^{ème} centile de la distribution en volume de taille des particules, c'est-à-dire que 50 % des particules ont une taille inférieure au D50 et 50 % ont une taille supérieure au D50.

De même, le D10, également noté D_{V}10, correspond au 10^{ème} centile de la distribution en volume de taille des particules, c'est-à-dire que 10 % des particules ont une taille inférieure au D10 et 90 % ont une taille supérieure au D10.

### Détermination du seuil de contrainte

Le seuil de contrainte est la valeur de contrainte (exprimée en Pascal) mesurée à un gradient de cisaillement de 0,1 s⁻¹ au rhéomètre Rhéolab QC fourni par la société Anton Paar, avec l'outil simple hélice simple pas, nommé SHSP, lors d'une phase de descente en vitesse de cisaillement. La mesure est généralement réalisée à température ambiante.

La composition hydraulique est disposée dans une cuve cylindrique de diamètre 45 mm et de hauteur 120mm. La cuve est positionnée dans le rhéomètre. L'outil SHSP est introduit dans la cuve. Un premier gradient de cisaillement est appliqué de manière progressive de 0 à 20 s⁻¹ en 60 secondes, puis un second gradient de cisaillement est appliqué de 20 s⁻¹ à 0,1 s⁻¹ en 60 secondes. La valeur de contrainte obtenue est relevée.

### Méthode de mesure de la résistance de compression

Quelle que soit l'échéance, la résistance de compression est mesurée sur des échantillons de béton ou mortier durci de forme cylindrique ayant un diamètre de 7 cm et une hauteur de 14 cm, la force appliquée à l'échantillon est augmentée à un taux de 3.85 kN/sec durant le test de compression.

Les échantillons de béton ou mortier durci ont été moulés immédiatement après la préparation du béton ou mortier. Le moule a été fixé à une table vibrante. Le béton ou mortier a été introduit dans le moule en deux couches. La première couche de béton ou mortier, puis la seconde couche ont été mises en place par vibration jusqu'à serrage complet. Le moule a été enlevé de la table à vibration et a été arasé pour enlever l'excès de béton ou mortier. Les moules sont fermés par un couvercle puis placés dans une chambre humide à 20°C ± 1°C. Le moule a été retiré de la chambre et l'éprouvette de béton ou mortier durci a été démoulée à l'échéance choisie pour le test de résistance à la compression jusqu'à 24 heures après le gâchage.

Pour les échéances supérieures à 24 heures après le gâchage, les éprouvettes ont été démoulées 24 heures après le gâchage puis replacé dans la chambre humide 20°C ± 1°C. Les éprouvettes de béton ou mortier durci ont été retirées de la chambre humide avant la mesure de la résistance à la compression. Les éprouvettes de béton ou mortier durci ont été essuyées puis recouvertes d'un linge humide en attendant la mesure.

Pour la mesure de la résistance à la compression, une charge croissante a été appliquée sur les faces latérales de l'éprouvette de béton ou mortier durci, à une vitesse de 2 400 N/s ± 200 N/s, jusqu'à la rupture de l'éprouvette.

### EXEMPLES

### Matières premières

Le ciment n°1 est un ciment Portland CEM I 52,5 N CE CP2 NF provenant de la cimenterie Lafarge de Saint Pierre La Cour. Ce ciment a été préparé par classification pneumatique en utilisant un séparateur TSV 1000 THF. Le principe consiste à séparer une population de départ en 2 fractions (voire 3 si on considère les ultra fines à part) : une fraction formée des plus grosses particules du produit de départ, appelée les rejets, et une fraction formée des plus fines particules du produit de départ. La vitesse de rotation du sélecteur ainsi que le débit d'air ont été réglés de façon à obtenir une séparation des particules à la granulométrie souhaitée. Le ciment obtenu présentait des particules dont les caractéristiques sont présentées dans le tableau 1 suivant :

**Tableau 1 :**

| | **Surface spécifique BET en m²/g** | **D10 en µm** | **D50 en µm** | **D90 en µm** |
|---|---|---|---|---|
| Ciment n°1 | 1,05 | 2,56 | 15,47 | 42,58 |
| | 1,7 | 1,73 | 8,05 | 21,97 |
| | 4,45 | 1,35 | 5,53 | 13,22 |

Le ciment n°2 est un ciment Portland CEM I 52,5 N CE PM ES NF provenant de la cimenterie Lafarge du Teil. Ce ciment a été préparé par classification pneumatique en utilisant un séparateur à jets d'air opposés ALPINE 200 AFG. Le principe consiste à séparer une population de départ en 2 fractions (voire 3 si on considère les ultra fines à part) : une fraction formée des plus grosses particules du produit de départ, appelée les rejets, et une fraction formée des plus fines particules du produit de départ. La vitesse de rotation du sélecteur ainsi que le débit d'air ont été réglés de façon à obtenir une séparation des particules à la granulométrie souhaitée. Le ciment obtenu présentait des particules dont les caractéristiques sont résumées dans le tableau 2 suivant :

**Tableau 2 :**

| | **Surface spécifique BET en m²/g** | **D10 en µm** | **D50 en µm** | **D90 en µm** |
|---|---|---|---|---|
| Ciment n°2 | 1,25 | 1,92 | 7,98 | 19,08 |
| | 1,6 | 1,42 | 7,08 | 18,01 |
| | 1,85 | 1,34 | 5,25 | 10,99 |

L'eau est l'eau du réseau.

L'addition minérale A1 est soit
- du métakaolin provenant de la société Lavollée SA et vendu sous le nom de Métamax et dont les particules présentent un D50 de 4.4 µm, soit
- de la fumée de silice provenant de la société Saint Gobain et vendu sous le nom de SEPR Le Pontet et dont les particules présentent un D50 de 3 µm

Le sable BE01 est un sable siliceux, certifié conformément à la norme européenne NF EN 196-1 d'avril 2006, provenant de la Société Sibelco et dont les particules présentent un D10 de 210µm, un D50 de 313 µm et un D90 de 410 µm ;
Le superplastifiant est à base d'éther polycarboxylique modifié, il s'agit du Prélom 300 de la société BASF dont la concentration en extrait sec est de 15 %, pourcentage en masse ;
L'addition minérale A2 est soit
- du Filler siliceux provenant de la société Sibelco et vendu sous le nom de Millisil C6 et dont les particules présentent un D50 de 35 µm;
- du carbonate de calcium provenant de la société Omya et vendu sous le nom de Durcal 1 et dont les particules présentent un D50 de 2.6 µm;

L'agent anti-moussant est le Dehydran provenant de la société Cognis dont la concentration en extrait sec est de 100%, pourcentage en masse.

Le sulfate de calcium anhydre (nommé anhydrite dans le tableau 3) provient de la société Anhydrite Minérale France et est vendu sous le nom d'Anhydrite Micro A.

L'agent modifiant la viscosité (nommé VMA dans le tableau 3) est à base de gomme de Diutane, il s'agit du Kelcocrete de la société Kelco dont la concentration en extrait sec est de 100 %, pourcentage en masse ;

Le latex est une dispersion aqueuse de fines particules de copolymères type styrène-butadiène, provenant de la société Chryso et vendu sous le nom de Chryso® Cim dont la concentration en extrait sec est de 50%, pourcentage en masse.

### Matériels

- une pompe volumétrique du type pompe à vis excentrée qui a été fourni par la société Power Sprays et dont le nom commercial est PS9000 ;
- Un rhéomètre viscosimètre Rhéolab QC vendu par la société Anton Paar ;
- un malaxeur pétrin RAYNERI R601, qui a été fourni par la société VMI avec une cuve de 10 litres. Ce malaxeur exerce un mouvement de rotation planétaire ;
- des moules cylindriques en carton de diamètre 7 cm et de hauteur 14 cm ;
- une armoire humide à 95-100% d'hygrométrie relative et 90°C +/-1 °C fournie par la société Verre Labo Mula ;
- une chambre humide à 95-100% d'hygrométrie relative et 20 +/-1 °C

### Exemple 1

Les compositions hydrauliques selon l'invention (gâchées 202 à 209, et gâchée 238, 303 et 308) ont été préparées et comparées à une composition témoin (gâchée 309). Le **Tableau 3** ci-après décrit les compositions préparées. Dans ce Tableau 3, l'unité est en partie relative en masse par rapport au ciment.

**Tableau 3 : Compositions hydrauliques**

| | | | | | | | | | | | | | |
|---|---|---|---|---|---|---|---|---|---|---|---|---|---|
| Gachée | | 309 | 303 | 208 | 202 | 203 | 204 | 205 | 206 | 207 | 209 | 238 | 308 |
| Ciment | N°1 | 100 | 100 | 100 | | | | | | | | | |
| | N°2 | | | | 100 | 100 | 100 | 100 | 100 | 100 | 100 | 100 | 100 |
| BET Ciment (m2/g) | | 1,05 | 4,45 | 1,7 | 1,6 | 1,6 | 1,6 | 1,6 | 1,6 | 1,85 | 1,6 | 1,25 | 1,25 |
| A1 | Metakaolin | 11 | 11 | 11 | 11 | 11 | 11 | 11 | 11 | 11 | 11 | 11 | 11 |
| | Fumée de Silice | 0 | 0 | 0 | 0 | 0 | 5 | 0 | 0 | 0 | 0 | 0 | 0 |
| A2 | Siliceux : C6 | 267 | 0 | 0 | 0 | 267 | 267 | 0 | 0 | 0 | 0 | 0 | 0 |
| | Calcaire : Durcal1 | 0 | 0 | 0 | 0 | 0 | 0 | 270 | 0 | 0 | 0 | 0 | 0 |
| Sable | Be01 | 109 | 109 | 109 | 109 | 109 | 137 | 109 | 109 | 109 | 109 | 109 | 185 |
| anhydrite | | 0 | 5,45 | 2,59 | 2,41 | 2,41 | 2,41 | 2,41 | 2,41 | 4,32 | 2,41 | 1,93 | 1,93 |
| VMA | | 0 | 0 | 0 | 0 | 0 | 0 | 0 | 0 | 0 | 0,1 | 0 | 0 |
| EAU | | 40 | 40,4 | 40,3 | 40,0 | 40,6 | 40 | 41,1 | 40,2 | 40,6 | 41,7 | 39,7 | 35,4 |
| Superplastifiant | Prelom 300 | 1,1 | 3,5 | 1,4 | 1,1 | 2 | 2 | 2,8 | 1,3 | 1,8 | 3,7 | 0,7 | 1,6 |
| Agent anti moussant | Dehydran | 0,06 | 0,06 | 0,06 | 0,06 | 0,06 | 0,06 | 0,06 | 0,06 | 0,06 | 0,06 | 0,06 | 0,06 |

Le béton a été fabriqué selon le protocole décrit ci-après :
1) introduction des matières sèches dans le bol d'un malaxeur Rayneri ;
2) de 0 à 60 secondes : début du malaxage à petite vitesse (15 tours par minute) pour homogénéiser le prémix ;
3) de 1 min à 1minute 30s : introduction de l'eau de gâchage + adjuvant en 30 secondes, à la vitesse de rotation de 15 tours par minute;
4) de 1 minute 30 s à 2 minutes 30 secondes : malaxage à petite vitesse (15 tours par minute);
5) de 2 minutes 30 secondes à 6 minutes : malaxage à grande vitesse (45 tours par minute);

Le seuil de contrainte et la résistance à la compression (Rc) ont été mesurés selon les protocoles décrits ci-avant. Le Tableau 4 ci-après présente les résultats obtenus.

**Tableau 4 : Résultats du seuil de contrainte et de résistance à la compression**

| N° de gachée | seuil de contrainte à 0,1 s-1 en Pa (à t = 7 min) | Rc 28 jours en Mpa |
|---|---|---|
| 202 | 285 | 99,6 |
| 203 | 106 | 117,6 |
| 204 | 175 | 111,2 |
| 205 | 147 | 112,4 |
| 206 | 134 | 90,8 |
| 207 | 221 | 97,3 |
| 208 | 222 | 98,2 |
| 209 | 86 | 102,5 |
| 238 | 263 | 102,3 |
| 303 | 178 | 99,1 |
| 308 | 61 | 123,8 |
| 309 | 104 | 85,5 |

## Revendications

1. Composition hydraulique comprenant en parties relatives en masse par rapport au ciment
- 100 parties de ciment dont les particules présentent une surface spécifique BET comprise de 1,20 à 5 m²/g ;
- 32 à 42 parties d'eau ;
- 5 à 50 parties d'une addition minérale A1 dont les particules présentent un D50 inférieur ou égal à 6 µm et choisie parmi la fumée de silice, le métakaolin, le laitier, les pouzzolanes ou leurs mélanges;
- 90 à 230 parties d'un sable dont les particules présentent un D50 supérieur ou égal à 50 µm et un D90 inférieur ou égal à 3 mm ;
- 0,0001 à 10 parties d'un superplastifiant, dont la concentration en matière active est de 15 % en masse.

2. Composition hydraulique selon la revendication 1 comprenant en parties relatives en masse par rapport au ciment
- 100 parties de ciment dont les particules présentent une surface spécifique BET comprise de 1,20 à 1,7 m²/g ;
- 38 à 42 parties d'eau ;
- 8 à 20 parties d'une addition minérale A1 dont les particules présentent un D50 inférieur ou égal à 6 µm et choisie parmi la fumée de silice, le métakaolin, le laitier, les pouzzolanes ou leurs mélanges;
- 90 à 180 parties d'un sable dont les particules présentent un D50 compris de 100 µm à 400 µm et un D90 inférieur ou égal à 800 µm ;
- 0,0001 à 10 parties d'un superplastifiant, dont la concentration en matière acticve est de 15 % en masse.

3. Composition hydraulique selon la revendication 1 **caractérisée en ce qu'**elle comprend en outre de 0.001 à 2 parties d'un agent modifiant la viscosité, exprimé en parties relatives en masse par rapport au ciment.

4. Composition hydraulique selon les revendications 1 ou 2 **caractérisée en ce que** le ciment est un ciment CEM I.

5. Composition hydraulique selon les revendications 1 à 3 **caractérisée en ce qu'**elle comprend en outre de 0 à 300 parties d'une addition minérale A2, différente de A1, dont les particules présentent un D50 compris de 1 µm à 50 µm, exprimé en parties relatives en masse par rapport au ciment.

6. Composition hydraulique selon les revendications 1 à 5 **caractérisée en ce qu'**elle comprend en outre de 0 à 10 parties de sulfate de calcium anhydre, exprimé en parties relatives en masse par rapport au ciment.

7. Composition hydraulique selon les revendications 1 à 6 **caractérisée en ce qu'**elle comprend en outre des fibres minérales, des fibres organiques ou des fibres métalliques ou un mélange de celles-ci.

8. Composition hydraulique selon les revendications 1 à 7 **caractérisée en ce qu'**elle comprend en outre de 0 à 0,5 parties d'un agent anti-moussant, exprimé en parties relatives en masse par rapport au ciment.

9. Procédé de fabrication d'une composition hydraulique selon l'une quelconque des revendications 1 à 8 dans lequel le ciment, les additions, le sable, l'eau et le superplastifiant sont mélangés.

10. Objet mis en forme pour le domaine de la construction comprenant la composition hydraulique selon l'une quelconque des revendications 1 à 8.

11. Procédé de fabrication d'un objet pour le domaine de la construction comprenant les étapes suivantes :
(i) préparation d'une composition hydraulique selon l'une des revendications 1 à 8 ;
(ii) application de la composition préparée à l'étape (i) sur un support avantageusement un moule, un mur, une paroi ou un sol ;
(iii) le cas échéant, démoulage après durcissement de la composition hydraulique.

12. Procédé de fabrication selon la revendication 11 **caractérisé en ce qu'**il comprend en outre une étape de pompage de la composition hydraulique après l'étape (i).

13. Procédé de fabrication selon la revendication 11 **caractérisé en ce que** l'étape (ii) est réalisée par projection de la composition hydraulique selon la revendication 1.

14. Procédé de fabrication selon la revendication 11 **caractérisé en ce que** l'étape (ii) est réalisée par pulvérisation de la composition selon la revendication 2.

15. Procédé de fabrication selon la revendication 11 **caractérisé en ce que** l'étape (ii) est réalisée par coulage ou calandrage de la composition selon la revendication 3.

## Patentansprüche

1. Hydraulische Zusammensetzung, umfassend in relativen Massenteilen in Bezug auf den Zement:
- 100 Teile Zement, dessen Partikel eine spezifische BET-Oberfläche zwischen 1,20 und 5 m²/g aufweisen;
- 32 bis 42 Teile Wasser;
- 5 bis 50 Teile eines mineralischen Zusatzes A1, dessen Partikel eine D50 kleiner gleich 6 µm aufweisen und der aus pyrogenem Siliciumdioxid, Metakaolin, Schlacke, Puzzolanen oder deren Gemischen ausgewählt ist;
- 90 bis 230 Teile eines Sands, dessen Partikel eine D50 größer gleich 50 µm und eine D90 kleiner gleich 3 mm aufweisen;
- 0,0001 bis 10 Teile eines Betonverflüssigers, dessen Konzentration an aktivem Material 15 Massen-% ist.

2. Hydraulische Zusammensetzung nach Anspruch 1, umfassend in relativen Massenteilen in Bezug auf den Zement:
- 100 Teile Zement, dessen Partikel eine spezifische BET-Oberfläche zwischen 1,20 und 1,7 m²/g aufweisen;
- 38 bis 42 Teile Wasser;
- 8 bis 20 Teile eines mineralischen Zusatzes A1, dessen Partikel eine D50 kleiner gleich 6 µm aufweisen und der aus pyrogenem Siliciumdioxid, Metakaolin, Schlacke, Puzzolanen oder deren Gemischen ausgewählt ist;
- 90 bis 180 Teile eines Sands, dessen Partikel eine D50 zwischen 100 µm und 400 µm und eine D90 kleiner gleich 800 µm aufweisen;
- 0,0001 bis 10 Teile eines Betonverflüssigers, dessen Konzentration an aktivem Material 15 Massen-% ist.

3. Hydraulische Zusammensetzung nach Anspruch 1, **dadurch gekennzeichnet, dass** sie ferner 0,001 bis 2 Teile eines Viskositätsmodifikators umfasst, ausgedrückt in relativen Massenteilen in Bezug auf den Zement.

4. Hydraulische Zusammensetzung nach den Ansprüchen 1 oder 2, **dadurch gekennzeichnet, dass** der Zement ein CEM-I-Zement ist.

5. Hydraulische Zusammensetzung nach den Ansprüchen 1 bis 3, **dadurch gekennzeichnet, dass** sie ferner 0 bis 300 Teile eines mineralischen Zusatzes A2 umfasst, der sich von A1 unterscheidet, dessen Partikel eine D50 zwischen 1 µm und 50 µm aufweisen, ausgedrückt in relativen Massenteilen in Bezug auf den Zement.

6. Hydraulische Zusammensetzung nach den Ansprüchen 1 bis 5, **dadurch gekennzeichnet, dass** sie ferner 0 bis 10 Teile wasserfreies Calciumsulfat umfasst, ausgedrückt in relativen Massenteilen in Bezug auf den Zement.

7. Hydraulische Zusammensetzung nach den Ansprüchen 1 bis 6, **dadurch gekennzeichnet, dass** sie ferner Mineralfasern, organische Fasern oder metallische Fasern oder ein Gemisch dieser umfasst.

8. Hydraulische Zusammensetzung nach den Ansprüchen 1 bis 7, **dadurch gekennzeichnet, dass** sie ferner 0 bis 0,5 Teile eines Antischaummittels umfasst, ausgedrückt in relativen Massenteilen in Bezug auf den Zement.

9. Verfahren zur Herstellung einer hydraulischen Zusammensetzung nach einem der Ansprüche 1 bis 8, wobei der Zement, die Zusätze, der Sand, das Wasser und der Betonverflüssiger gemischt werden.

10. Für das Baugewerbe geformter Gegenstand, umfassend die hydraulische Zusammensetzung nach einem der Ansprüche 1 bis 8.

11. Verfahren zur Herstellung eines Gegenstands für das Baugewerbe, umfassend die folgenden Schritte:
(i) Zubereiten einer hydraulischen Zusammensetzung nach einem der Ansprüche 1 bis 8;
(ii) Aufbringen der in Schritt (i) zubereiteten Zusammensetzung auf einen Träger, vorteilhafterweise eine Gießform, eine Mauer, eine Wand oder einen Boden;
(iii) gegebenenfalls Entformen nach Aushärten der hydraulischen Zusammensetzung.

12. Herstellungsverfahren nach Anspruch 11, **dadurch gekennzeichnet, dass** es ferner einen Schritt des Pumpens der hydraulischen Zusammensetzung nach Schritt (i) umfasst.

13. Herstellungsverfahren nach Anspruch 11, **dadurch gekennzeichnet, dass** der Schritt (ii) durch Spritzen der hydraulischen Zusammensetzung nach Anspruch 1 durchgeführt wird.

14. Herstellungsverfahren nach Anspruch 11, **dadurch gekennzeichnet, dass** der Schritt (ii) durch Sprühen der Zusammensetzung nach Anspruch 2 durchgeführt wird.

15. Herstellungsverfahren nach Anspruch 11, **dadurch gekennzeichnet, dass** der Schritt (ii) durch Gießen oder Kalandrieren der Zusammensetzung nach Anspruch 3 durchgeführt wird.

## Claims

1. A hydraulic composition comprising in relative parts by mass in relation to the cement
- 100 parts of cement of which the particles have a BET specific surface area of 1.20 to 5 m²/g;
- 32 to 42 parts of water;
- 5 to 50 parts of a mineral addition A1 of which the particles have a D50 of 6 µm or less and selected from silica fume, metakaolin, slag, pozzolanas, or mixtures thereof;
- 90 to 230 parts of a sand of which the particles have a D50 of 50 µm or greater and a D90 of 3 mm or less;
- 0.0001 to 10 parts of a superplasticizer, of which the concentration of active material is 15 % by mass.

2. The hydraulic composition according to claim 1, comprising in relative parts by mass in relation to the cement
- 100 parts of cement of which the particles have a BET specific surface area of 1.20 to 1.7 m²/g;
- 38 to 42 parts of water;
- 8 to 20 parts of a mineral addition A1 of which the particles have a D50 of 6 µm or less and selected from silica fume, metakaolin, slag, pozzolanas, or mixtures thereof;
- 90 to 180 parts of a sand of which the particles have a D50 of 100 µm to 400 µm and a D90 of 800 µm or less;
- 0.0001 to 10 parts of a superplasticizer, of which the concentration of active material is 15 % by mass.

3. The hydraulic composition according to claim 1, **characterized in that** it further comprises from 0.001 to 2 parts of a viscosity-modifying agent, expressed in relative parts by mass in relation to the cement.

4. The hydraulic composition according to claims 1 or 2, **characterized in that** the cement is a CEM I cement.

5. The hydraulic composition according to claims 1 to 3, **characterized in that** it further comprises from 0 to 300 parts of an addition mineral A2, different from A1, of which the particles have a D50 of 1 µm to 50 µm, expressed in relative parts by mass in relation to the cement.

6. The hydraulic composition according to claims 1 to 5, **characterized in that** it further comprises from 0 to 10 parts of anhydrous calcium sulphate, expressed in relative parts by mass in relation to the cement.

7. The hydraulic composition according to claims 1 to 6, **characterized in that** it further comprises mineral fibres, organic fibres, or metal fibres, or a mixture thereof.

8. The hydraulic composition according to claims 1 to 7, **characterized in that** it further comprises from 0 to 0.5 parts of an antifoaming agent, expressed in relative parts by mass in relation to the cement.

9. A process for manufacturing a hydraulic composition according to any one of claims 1 to 8, wherein the cement, the additions, the sand, the water, and the superplasticizer are mixed together.

10. An object shaped for the field of construction comprising the hydraulic composition according to any one of claims 1 to 8.

11. A process for manufacturing an object for the field of construction comprising the following steps:
(i) preparing a hydraulic composition according to one of claims 1 to 8;
(ii) applying the composition prepared in step (i) to a support, advantageously a mould, a wall, a partition, or a floor;
(iii) if need be, demoulding the hydraulic composition after hardening.

12. The manufacturing process according to claim 11, **characterized in that** it further comprises a step of pumping the hydraulic composition after step (i).

13. The manufacturing process according to claim 11, **characterized in that** step (ii) is carried out by projecting the hydraulic composition according to claim 1.

14. The manufacturing process according to claim 11, **characterized in that** step (ii) is carried out by spraying the composition according to claim 2.

15. The manufacturing process according to claim 11, **characterized in that** step (ii) is carried out by casting or calendering the composition according to claim 3.
